# EUROPEAN PATENT APPLICATION

(11) **EP 1 548 625 A1**
(43) Date of publication of application: **29.06.2005**
(21) Application number: 03761603.4
(22) Date of filing: 23.06.2003
(51) Int. Cl.: G06F 17/60

(54) **METHOD OF UPDATING THE INFORMATION STORED ON A CD-CARD VIA THE INTERNET USING SAID CARD**

(30) Priority: 28.06.2002 ES 200201507
(71) Applicant: Gallego Rubio, Pedro, 41804 Olivares, Sevilla (ES)
(72) Inventor: Gallego Rubio, Pedro, 41804 Olivares, Sevilla (ES)
(74) Representative: Gil Vega, Victor
(86) International application number: PCT/ES2003/000310
(87) International publication number: WO 2004/003799

(57) **Abstract**

The present invention is focused in the use of a cd-card where we have information recorded beforehand (images, sounds, effects, etc) that serve us as a guide, remaining some areas that will be modified and updated via Internet at the moment we insert the card in the cd reader of any computer that is connected to the Internet; updating this way the information we see as it is linked to the Internet.

## Description

### BACKGROUND OF THE INVENTION

This invention is framed in the technology sector of the updating process of the information recorded on a cd-card by replacement, via Internet.

At the moment there are several ways of accessing the information in the Internet. For this, the present invention is focused in the use of a cd-card where we have information recorded beforehand (images, sounds, effects, etc) that serve us as a guide, remaining some areas that will be modified and updated via Internet at the moment we insert the card in the cd reader of any computer that is connected to the Internet; updating this way the information we see as it is linked to the Internet.

### DETAILED DESCRIPTION OF THIS INVENTION

The present invention is referred to the use of a card of the type of a cd-rom but with smaller dimensions and capacity, in which we store the design of files (sounds, texts, effects, etc.) which contain a information; besides active areas that are updated via Internet by calling other documents stored in a hard drive disk.

### PREFERRED EMBODIMENT OF THE INVENTION

The present invention is illustrated additionally by the following example which don't seek to limit its reach.

### Example 1

In the cd-card is stored the information of an art gallery; we can see a room of this gallery that turns around 360° y we are placed in the centre; if we bring the hand (cursor) near one picture, this is enlarged and the information about that picture will appear. This information is stored in the cd-card itself and it is fixed; but when any picture is sold, it cannot appear in that gallery; but if we are connected to the Internet in the place of the sold picture another picture will appear overlaped; this change is not perceived, because at the moment we insert the cd-card on a computer connected to the Internet, this change is immediate. In the case we are not connected to the Internet, the card will not be updated.

## Claims

1. New procedure of getting information (didactic, cultural, advertising, commercial etc.) with direct access from a cd -card via Internet that serves as a call for the updating of the information. The technical improvement this invention contributes is the direct access to a certain information, using the cd-card as call key or guide.
